# EUROPEAN PATENT SPECIFICATION

(11) **EP 3 851 548 B1**
(45) Date of publication and mention of the grant of the patent: **07.08.2024**
(21) Application number: 19899189.5
(22) Date of filing: 13.12.2019
(51) Int. Cl.: C22C 21/00, C22C 21/08, B22F 9/08, B22F 10/20, B22F 10/25, B22F 10/28, B22F 10/36, B22F 10/366, B33Y 70/00, C22C 1/04, C22C 21/06

(54) **ALUMINUM ALLOY POWDER CAPABLE OF BEING USED FOR 3D PRINTING, PREPARATION METHOD THEREFOR, AND APPLICATION THEREOF**
ALUMINIUMLEGIERUNGSPULVER FÜR 3D-DRUCK, VERFAHREN ZU SEINER HERSTELLUNG UND SEINE ANWENDUNG
POUDRE D'ALLIAGE D'ALUMINIUM POUVANT ÊTRE UTILISÉE POUR L'IMPRESSION 3D, SON PROCÉDÉ DE PRÉPARATION ET SON APPLICATION

(30) Priority: 19.12.2018 CN 201811555446
(43) Date of publication of application: 21.07.2021
(73) Proprietor: CRRC Academy Co. Ltd., Beijing 100161 (CN); Central South University, Changsha, Hunan 410083 (CN)
(72) Inventor: ZHU, Hongbin, Beijing 100161 (CN); LI, Ruidi, Beijing 100161 (CN); WANG, Minbo, Beijing 100161 (CN); LIU, Yu, Beijing 100161 (CN); YUAN, Tiechui, Beijing 100161 (CN); NIU, Pengda, Beijing 100161 (CN)
(74) Representative: Raffay & Fleck
(86) International application number: PCT/CN2019/125183
(87) International publication number: WO 2020/125553

(56) References cited:
- WO-A1-2018/144323
- WO-A2-2012/058542
- CA-A1- 3 059 286
- CN-A- 1 643 171
- CN-A- 103 328 666
- CN-A- 106 756 299
- CN-A- 107 502 795
- CN-A- 108 465 807
- CN-A- 108 465 807
- CN-A- 109 487 126
- JP-A- H08 281 448

## Description

### CROSS-REFERENCE TO RELATED APPLICATION

The present application claims priority to Chinese Application No. 2018115554465 filed on December 19, 2018, entitled "Aluminum Alloy Powder Capable of Being Used for 3D Printing, Preparation Method and Application Thereof,"

### FIELD OF TECHNOLOGY

The present application belongs to the field of special materials for additive manufacturing (also called 3D printing), and specifically relates to an aluminum alloy powder capable of being used for 3D printing, a preparation method and application thereof.

### BACKGROUND

As a rapid manufacturing technology, a laser additive manufacturing technology has become an effective way to solve the forming problems of complex high-performance precision aluminum alloy members. Laser 3D printing technology does not require mechanical processing or moulds, and has the advantages of no segregation of components, fine grains, high mechanical strength, high precision, complex shapes and the like. However, there are few aluminum alloys suitable for laser 3D printing, including only low-strength and low-elongation Al-Si alloy and Al-Si-Mg alloy, as well as Scalmalloy alloy developed by Airbus Company.

Although Scalmalloy alloy has a tensile strength of 490 MPa and an elongation of 13%, it has a single strengthening mechanism, mainly Al₃Sc nanoparticle strengthening. In addition, the traditional aluminum alloys for 3D printing still have the following problems: (1) Having insufficient stress corrosion resistance, difficult to meet the corrosion resistance requirements in the service environment of large aircraft and rail transit. This is because the presence of intercrystalline Mg₂Al₃ which leads to poor resistance to stress corrosion and electrochemical corrosion of the materials. (2) Inability to meet the stability and reliability of printing components for long term service in extreme cold and hot environments, and having insufficient creep resistance. For example, rail transit and aircraft are usually subject to severe cold and heat. These traditional aluminum alloys are easy to become brittle at low temperature, and easy to creep at high temperature. This is because the traditional 3D printing aluminum alloy has no pining phase at the grain boundary and presents an unstable state.

Aluminium -magnesium based alloys are known in the prior art. Patent application CA3059286 A1 discloses an Al-Mg based alloy powder. Furthermore, patent application WO2012/058542 A2 discloses a bulk Al-Mg alloy with a similar composition to the alloy of the present invention.

Although the researches related to aluminum alloy for 3D printing are also disclosed in the prior art, they all bring new problems to a greater or lesser extent and cannot provide a good solution to the problems above.

As a result, the present application is proposed.

### SUMMARY

In order to solve the technical problems above, the present application proposes that some specific elements Cu, Fe, Si, Cr, Ni and the like are added and the proportional relation among these elements is adjusted so that respective components play a synergistic effect, and the tensile strength and elongation of materials are then improved using microalloying by multiple strengthening mechanisms such as multiple precipitation of nanoparticles, grain refinement and the like; the harms of stress corrosion and chemical corrosion caused by concentration of Al₆Mn and Mg₂Al₃ at grain boundaries are eliminated; in addition, multi-scale benefit phases are formed at the grain boundaries, which increases the reliability and stability of the materials for service in severe cold and hot environments.

The technical solutions of the present application are as follows:
an aluminum alloy powder includes the following components by mass percent: 1.00 wt% to 10.00wt% of Mg, 0.2 wt% to 1 wt% of Sc, 0.1 wt% to 1.60 wt% of Zr, 0.1 wt% to 1 wt% of Mn, 0.01 wt% to 0.90 wt% of Fe, 0.01 wt% to 3.00 wt% of Cu, 1 wt% to 3 wt% of Si, 0.01 wt% to 3.50 wt% of Zn, 0.01 wt% to 0.08 wt% of Cr, 0.01 wt% to 0.08 wt% of Ni, and the balance of Al.

Alternatively, the contents of the main elements in the aluminum alloy powder of the present application are as follows: 6 wt% to 9 wt% of Mg, 0.1 wt% to 0.6 wt% of Zr.

As one of the embodiments of the present application, the aluminum alloy powder includes the following components by mass percent: 8 wt% to 9 wt% of Mg, 0.6 wt% to 0.7 wt% of Sc, 0.2 wt% to 0.3 wt% of Zr, 0.7 wt% to 0.9 wt% of Mn, 0.2 wt% to 0.25 wt% of Fe, 1.5 wt% to 1.6 wt% of Cu, 1.1 wt% to 1.2 wt% of Si, 0.7 wt% to 0.9 wt% of Zn, 0.01 wt% to 0.04 wt% of Cr, 0.05 wt% to 0.06 wt% of Ni, and the balance of Al.

As one of the embodiments of the present application, the aluminum alloy powder includes the following components by mass percent: 8 wt% to 9 wt% of Mg, 0.6 wt% to 0.7 wt% of Sc, 0.3 wt% to 0.4 wt% of Zr, 0.8 wt% to 0.9 wt% of Mn, 0.04 wt% to 0.06 wt% of Fe, 2.2 wt% to 2.3 wt% of Cu, 2 wt% to 2.1 wt% of Si, 1 wt% to 1.2 wt% of Zn, 0.01 wt% to 0.02 wt% of Cr, 0.05 wt% to 0.06 wt% of Ni, and the balance of Al.

The present application also provides a preparation method of the aluminum alloy powder above, including:
(1) vacuum melting raw materials;
(2) preparing powder by vacuum gas atomization; and
(3) sieving and drying the powder.

Wherein in step (1), the melting temperature is 710°C to 810°C.

In step (2), the atomization gas is argon or helium, the atomization pressure is 0.5 MPa to 9 MPa, the atomization cone angle is 30° to 70°, and the atomization temperature is 700°C to 900°C.

In step (3), the sieved powder has a particle size of 5 µm to 150 µm and a main body particle size of 15 µm to 75 µm; the main body particle size means that the powder in this size range accounts for more than 60%. The obtained powder is dried at 90°C to 95°C for 2 to 8 hours.

As a specific embodiment of the present application, the preparation method includes the following steps:
(1) vacuum melting: adding weighed master alloy/pure metal raw materials into a vacuum induction melting furnace for preheating, preserving for 10 to 15 minutes, continuing heating to 710°C to 810°C at a heating rate of 10 °C/min to 20 °C/min, keeping at a constant temperature until the raw materials are softened, spreading a covering agent on the surface of the melt, introducing hexachloroethane for degassing, stirring, and standing for 30 to 35 minutes while heat-preserving, so that the melt elements are evenly diffused, and then casted with an iron mould to obtain a raw material ingot blank for gas atomization;
(2) vacuum gas atomizing: putting the above-mentioned raw material ingot blank into a vacuum atomization melting furnace for heating and refining, the vacuum degree in the furnace being less than or equal to 10 Pa, raising the temperature to 700°C to 900°C at a heating rate of 5 °C/min to 10 °C/min, preserving for 10 to 30 minutes while exhausting and performing electromagnetic stirring continuously at a stirring frequency of 2000 Hz to 5000 Hz during the preservation; after the exhaustion is completed, allowing a homogenized alloy liquid to pass a tundish and discharge spouts and enter an atomization tank having an atomization pressure of 0.5 MPa to 9 MPa and an atomization cone angle of 30° to 70°, the atomizing gas being argon or helium;
(3) powder sieving: sieving the prepared powder by an airflow sieving technology, wherein the sieved powder has a particle size of 5 µm to 150 µm and a main body particle size of 15 µm to 75 µm, wherein the main body particle size means that the powder in this size range accounts for more than 60%; and
(4) powder drying: putting the powder in a vacuum drying oven, drying for 2 to 8 hours at a temperature of 90°C to 95°C. This operation may reduce the H₂O content of the pre-alloyed powder, so that the generation of oxides during the printing process is effectively reduced, and the performance of the printed workpiece is improved.

The master alloy ingots or pure metal ingots used in the preparation method above are: master alloy Al-(5 wt% to 20 wt%)Mn; Al-(1.8 wt% to 2.0 wt%)Sc; Al-(5 wt% to 15 wt%)Zr; Al-(6 wt% to 12 wt%) Fe; Al-(10 wt% to 30 wt%)Si; Al-(5 wt% to 20 wt%)Ni; Al-(5 wt% to 15 wt%) Cu; pure metal Al (99.9%); pure metal Mg (99.9%); and pure metal Zn (99.9%).

The present application is to solve the problems of low mechanical properties, insufficient stress corrosion resistance, as well as insufficient low temperature resistance and high temperature thermal stability of traditional aluminum alloys for 3D printing, and provides technical solutions in which elements Cu and Ni are added and the addition amount of these elements is controlled so as to form a mechanism of AhCu nano-cluster strengthening, Al₆Mn nanoparticle strengthening, Al₃Ni particle strengthening, and nanocrystalline synergistic strengthening, so that Ah Sc nanoparticles and Al₃Zr nanoparticles are present in the alloy; in addition, elements Si and Fe are added, and the proportion of each component in the alloy is adjusted to eliminate brittle phases at the grain boundaries and form intracrystalline AlFeSiMn nano-composite particles, thereby improving the stress corrosion resistance and thermal stability of the materials.

The aluminum alloy obtained by the technical solution of the present application has a microhardness of 120 Hv to 170 Hv, an internal grain size of 1µm to 6µm in the powder, an internal nanoparticle size of 2 nm to 100 nm, and an internal nanoparticle is composed by one or more of Al₃Sc, Al₃Zr, Al₂Cu, Al₆Mn and Mg₂Si. Preferably, the internal nanoparticle includes at least the composite of Al₃Sc, Al₃Zr and Al₆Mn; for example, the composite of Al₃Sc, Al₃Zr, Al₂Cu and Al₆Mn, the composite of Al₃Sc, Al₃Zr, AhCu, Al₆Mn and Mg₂Si, the composite of Al₃Sc, Al₃Zr, AhCu and Al₆Mn.

The present application also provides an application of the aluminum alloy powder above in the fields of 3D printing, thermal spraying, cold spraying, resurfacing welding, cladding, powder metallurgy, powder forging, etc.; wherein, the 3D printing includes: SLM and LENS; specifically, the aluminum alloy powder having a powder particle size range of 5 µm to 50 µm may be used for selective laser melting (SLM) 3D printing; and the aluminum alloy powder having a particle size range of 51 µm to 150 µm may be used for laser engineered net shaping (LENS) 3D printing.

The present application also provides a 3D printed workpiece, which is prepared from the aluminum alloy powder above by 3D printing. Wherein, the 3D printing includes the following steps:
(1) raising the heating temperature of a printing substrate to 180°C to 300°C;
(2) performing selective laser melting on the aluminum alloy powder and then performing 3D printing;

wherein the conditions for SLM printing includes a laser power of 200 W to 400 W, a scanning speed of 600 mm/s to 1200 mm/s, a scanning distance of 0.05 mm to 0.1 mm, and a scanning layer thickness of 0.03 mm to 0.05 mm;
the conditions for LENS printing includes a laser power of 1500 W to 1600 W, a scanning speed of 8 mm/s to 10 mm/s, and a powder feeding rate of 30 g/min to 40 g/min.

The 3D printed workpiece has a microscopic grain size of 0.3 µm to 0.8 µm and dispersed multiple nanoparticle precipitates of 1 nm to 5 nm including Al₃Sc nanoparticles, Al₃Zr nanoparticles, AhCu nanoparticles, Al₆Mn nanoparticles, Mg₂Si nanoparticles are present in the grains. The 3D printed workpiece has a tensile strength of 500 MPa to 580 MPa, and an elongation of 5% to 25%. The specific tensile strength and elongation may be customized by adjusting the composition. The maximum tensile strength is 580 MPa and the maximum elongation is 7%. The workpiece may have a tensile strength of 450 MPa to 490 MPa without heat treatment, and has a stress corrosion resistance SCC greater than or equal to 240.

The present application solves the problems of insufficient mechanical properties, difficult customization of mechanical properties, and poor stress corrosion resistance of traditional AlMgScZr alloy for 3D printing. The resulting printed workpiece has high dimensional accuracy, fine structure and no segregation of components.

### BRIEF DESCRIPTION OF THE DRAWINGS

FIG. 1 shows a morphology of high-strength aluminum alloy powders for 3D printing obtained in embodiment 5.
FIG. 2 shows internal grains of the high-strength aluminum alloy powder for 3D printing obtained in embodiment 5.
FIG. 3 shows a corroded morphology of the internal polished cross section of the high-strength aluminum alloy powder for 3D printing obtained in embodiment 5.
FIG. 4 is a partial enlarged view of FIG. 3.
FIG. 5 shows a grain size distribution of the microstructure grains of a workpiece obtained in embodiment 6.
FIG. 6 shows an X-ray diffraction pattern of the microstructure grains of the workpiece obtained in embodiment 6.
FIG. 7 shows an SEM image of the submicron ultrafine grain structure of the microstructure grains of the workpiece obtained in embodiment 6.
FIG. 8 shows a stress-strain curve of the workpiece obtained in embodiment 6.

### DETAILED DESCRIPTION

The following embodiments are intended to illustrate the present application, but are not intended to limit the scope of the present application.

### Comparative embodiment 1

This embodiment provides an aluminum alloy dedicated to SLM printing, containing the following components by mass percent: 9.00 wt% of Mg, 0.80 wt% of Sc, 0.55 wt% of Zr, 0.50 wt% of Mn, 0.01 wt% of Fe, 0.20 wt% of Cu, 0.05 wt% of Si, 1.05 wt% of Zn, 0.08 wt% of Cr, 0.06 wt% of Ni and the balance of Al.

A preparation method for the aluminum alloy includes:
(1) vacuum melting, and then preparing powders using argon atomization: the melting temperature being 820°C, and the pressure in the melting furnace being 0.6 MPa;
(2) then atomizing metal melt droplets using argon as the medium, with the atomization pressure of 7 MPa; and
(3) sieving the prepared spherical powders with a sieve of 250 meshes to obtain powders having an average particle size of about 25 µm and drying the sieved powders in a vacuum drying oven at 90°C for 8 hours, and the resulted powders may be used for SLM printing.

According to the test, the powder has a microhardness of 125 Hv and an internal grain size of 2 µm, and the size of Al₃Sc, Al₃Zr and Al₆Mn nanoparticles in the powder is 2 nm to 50 nm.

### Comparative embodiment 2

An SLM printed work piece is provided, the preparation steps of which are as follows:
(1) raising the heating temperature of a printing substrate to 180°C;
(2) performing selective laser melting on the aluminum alloy powders obtained in embodiment 1 and then performing SLM printing;
wherein the laser power is 200 W; the scanning speed is 600 mm/s; the scanning distance is 0.05 mm and the powder layer thickness is 0.03 mm.

An obtained workpiece has a microstructure grain size of 0.7 µm, and dispersed Al₃Sc, Al₃Zr and Al₆Mn nanoparticle precipitates of 3 nm are present in the grains.

The obtained workpiece has a tensile strength of 485 MPa, an elongation of 17%, and a stress corrosion resistance SCC of 247.

The obtained workpiece is subjected to heat treatment at 288°C and preserved in a vacuum annealing furnace for 4 hours, such that it has a tensile strength of up to 550 MPa, an elongation up to 15%, and a stress corrosion resistance SCC of 245.

### Comparative embodiment 3

An aluminum alloy dedicated to SLM printing is provided, containing the following components by mass percent: 4.50 wt% of Mg, 0.60 wt% of Sc, 0.30 wt% of Zr, 0.5 wt% of Mn, 0.01 wt% of Fe, 0.5 wt% of Cu, 0.15 wt% of Si, 0.5 wt% of Zn, 0.02 wt% of Cr, 0.05 wt% of Ni and the balance of Al.

A preparation method for the aluminum alloy includes:
(1) vacuum melting, and then preparing powders using argon atomization: the melting temperature being 850°C, and the pressure in the melting furnace being 0.5 MPa;
(2) then atomizing metal melt droplets using argon as the medium, with the atomization pressure of 7 MPa; and
(3) sieving the prepared spherical powders with a sieve of 250 meshes to obtain powders having an average particle size of about 28 µm and drying the sieved powders in a vacuum drying oven at 90°C for 8 hours, and the resulted powders may be used for SLM printing.

According to the test, the powder has a microhardness of 145 Hv and an internal grain size of 4 µm, and the size of Al₃Sc, Al₃Zr, Al₂Cu and Al₆Mn nanoparticles in the powder is 5 nm to 40 nm.

### Comparative embodiment 4

An SLM printed work piece is provided, the preparation steps of which are as follows:
(1) raising the heating temperature of a substrate to 250°C;
(2) performing selective laser melting on the aluminum alloy powders obtained in embodiment 3 and then performing SLM printing; wherein parameter conditions include a laser power of 300 W; a scanning speed of 800 mm/s; a scanning distance of 0.1 mm; and a scanning layer thickness of 0.05 mm.

An obtained workpiece has a microstructure grain size of 0.8 µm, and dispersed Ah Sc, Al₃Zr, Al₂Cu and Al₆Mn nanoparticle precipitates of 4 nm are present in the grains.

The obtained workpiece has a tensile strength of 463 MPa, an elongation of 24%, and a stress corrosion resistance SCC of 247.

The obtained workpiece is subjected to heat treatment at 325°C and preserved in a vacuum annealing furnace for 12 hours, such that it has a tensile strength of 505 MPa, an elongation of 22%, and a stress corrosion resistance SCC of 255.

### Embodiment 5

An aluminum alloy dedicated to SLM printing is provided, containing the following components by mass percent: 8.20 wt% of Mg, 0.66 wt% of Sc, 0.22 wt% of Zr, 0.8 wt% of Mn, 0.21 wt% of Fe, 1.52 wt% of Cu, 1.15 wt% of Si, 0.80 wt% of Zn, 0.03 wt% of Cr, 0.06 wt% of Ni and the balance of Al.

A preparation method for the aluminum alloy includes:
(1) vacuum melting, and then preparing powders using argon atomization: the melting temperature being 900°C, and the pressure in the melting furnace being 0.6 MPa;
(2) then atomizing metal melt droplets using argon as the medium, with the atomization pressure of 8.5 MPa; and
(3) sieving the prepared spherical powders with a sieve of 250 meshes to obtain powders having an average particle size of about 26 µm and drying the sieved powders in a vacuum drying oven at 90°C for 8 hours, and the resulted powders may be used for SLM printing.

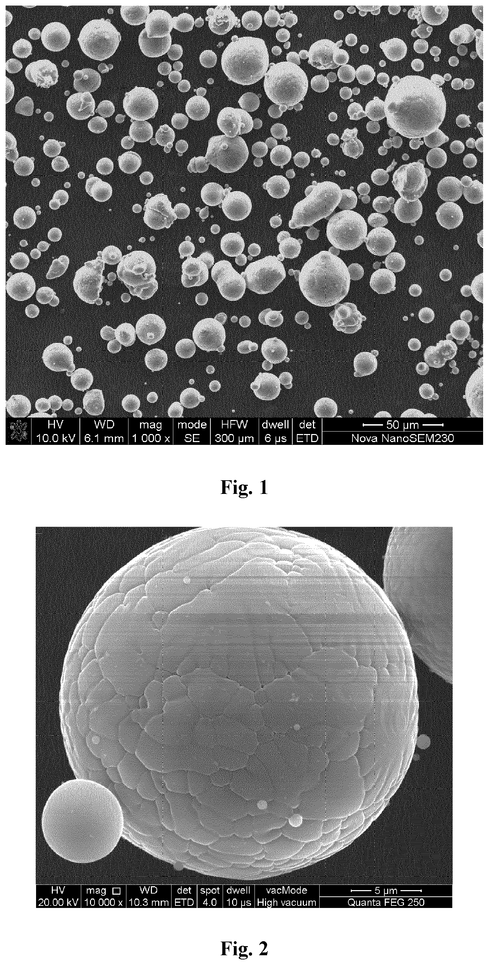

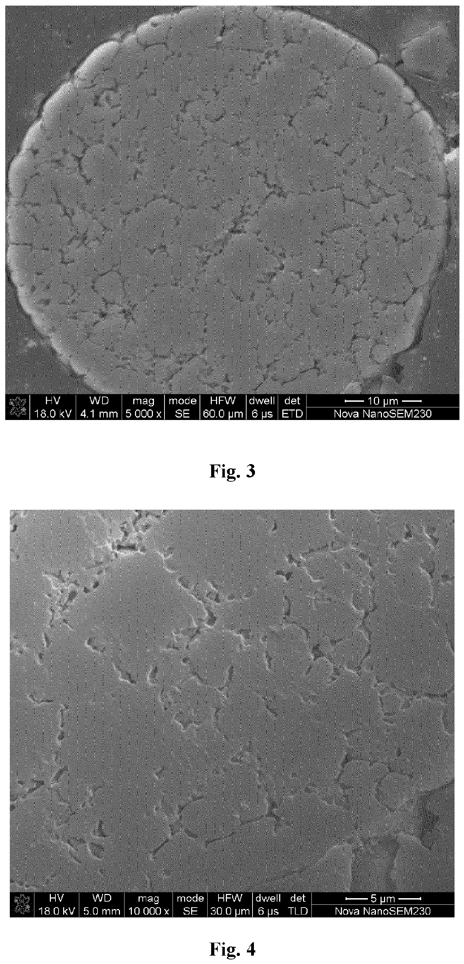

According to the test, the powder has a microhardness of 163 Hv and an internal grain size of 3.5 µm, and the size of Al₃Sc, Al₃Zr, AhCu, Al₆Mn and Mg₂Si nanoparticles in the powder is 3 nm to 46 nm. As shown in FIGS. 1, 2, 3 and 4.

### Embodiment 6

An SLM printed work piece is provided, the preparation steps of which are as follows:
(1) raising the heating temperature of a substrate to 300°C;
(2) performing selective laser melting on the aluminum alloy powders obtained in embodiment 5 and then performing SLM printing; wherein process parameters include a laser power of 400 W; a scanning speed of 1200 mm/s; a scanning distance of 0.05 mm; and a scanning layer thickness of 0.03 mm.

An obtained workpiece has a microstructure grain size of 0.3 µm, and dispersed Al₃Sc, Al₃Zr, Al₂Cu, Al₆Mn and Mg₂Si nanoparticle precipitates of 2 nm are present in the grains.

The obtained workpiece has a tensile strength of 489 MPa, an elongation of 15%, and a stress corrosion resistance SCC of 241.

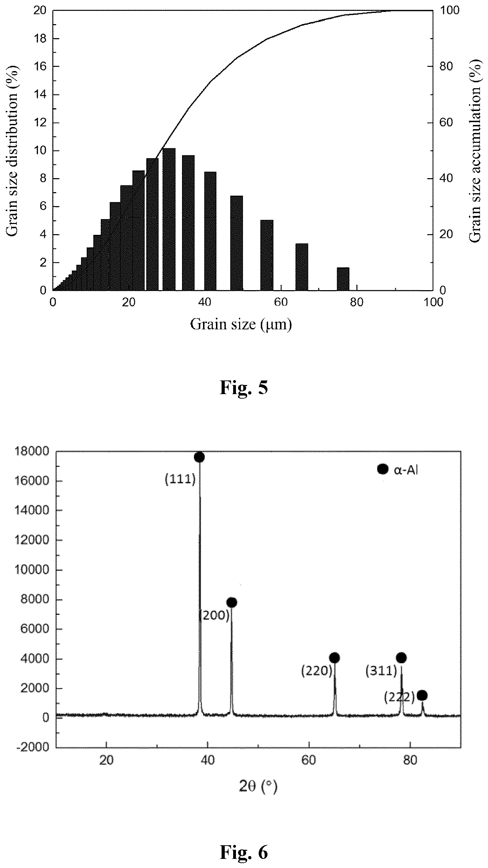

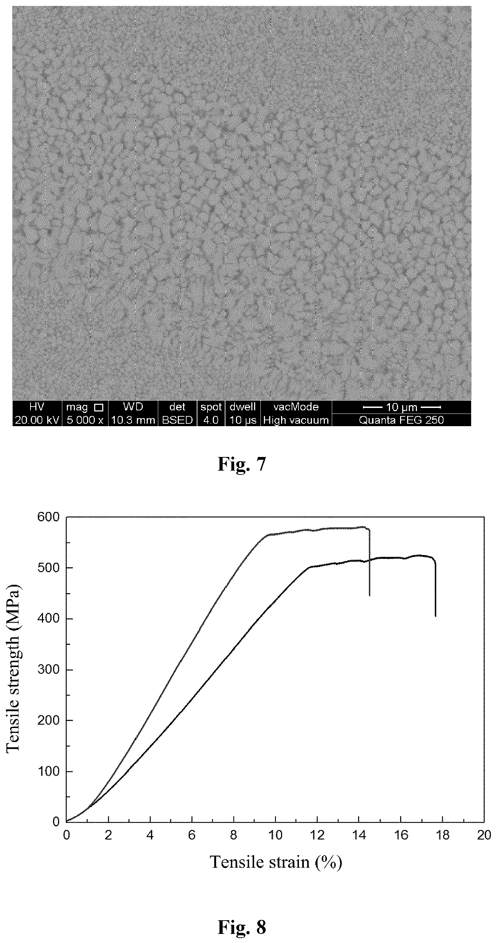

The obtained workpiece is subjected to heat treatment at 375°C and preserved in a vacuum annealing furnace for 8 hours, such that it has a tensile strength of up to 560 MPa, an elongation up to 9%, and a stress corrosion resistance SCC up to 253. As shown in FIGS. 5, 6, 7 and 8.

### Comparative embodiment 7

An aluminum alloy dedicated to SLM printing is provided, containing the following components by mass percent: 3.20 wt% of Mg, 0.36 wt% of Sc, 0.12 wt% of Zr, 0.4 wt% of Mn, 0.01 wt% of Fe, 1.25 wt% of Cu, 0.01 wt% of Si, 0.20 wt% of Zn, 0.08 wt% of Cr, 0.56 wt% of Ni and the balance of Al.

A preparation method for the aluminum alloy includes:
(1) vacuum melting, and then preparing powders using argon atomization: the melting temperature being 790°C, and the pressure in the melting furnace being 0.4 MPa;
(2) then atomizing metal melt droplets using argon as the medium, with the atomization pressure of 7.6 MPa; and
(3) sieving the prepared spherical powders with a sieve of 250 meshes to obtain powders having an average particle size of about 29 µm and drying the sieved powders in a vacuum drying oven at 90°C for 8 hours, and the resulted powders may be used for SLM printing.

According to the test, the powder has a microhardness of 155 Hv and an internal grain size of 5.5µm, and the size of Al₃Sc, Al₃Zr, Al₂Cu and Al₆Mn nanoparticles in the powder is 5 nm to 50 nm.

### Comparative embodiment 8

An SLM printed work piece is provided, the preparation steps of which are as follows:
(1) raising the heating temperature of a substrate to 300°C;
(2) performing selective laser melting on the aluminum alloy powders obtained in embodiment 7 and then performing SLM printing; wherein process parameters include a laser power of 350 W; a scanning speed of 1050 mm/s; a scanning distance of 0.08 mm; and a scanning layer thickness of 0.05 mm.

An obtained workpiece has a microstructure grain size of 0.7 µm, and dispersed Al₃Sc, Al₃Zr, Al₂Cu and Al₆Mn nanoparticle precipitates of 5 nm are present in the grains.

The obtained workpiece has a tensile strength of 453 MPa, an elongation of 26%, and a stress corrosion resistance SCC of 253.

The obtained workpiece is subjected to heat treatment at 275°C and preserved in a vacuum annealing furnace for 28 hours, such that it has a tensile strength of up to 502 MPa, an elongation up to 25%, and a stress corrosion resistance SCC up to 258.

### Embodiment 9

An aluminum alloy dedicated to LENS printing is provided, containing the following components by mass percent: 8.20 wt% of Mg, 0.65 wt% of Sc, 0.35 wt% of Zr, 0.85 wt% of Mn, 0.05 wt% of Fe, 2.25 wt% of Cu, 2.01 wt% of Si, 1.20 wt% of Zn, 0.01 wt% of Cr, 0.06 wt% of Ni and the balance of Al.

A preparation method for the aluminum alloy includes:
(1) vacuum melting, and then preparing powders using argon atomization: the melting temperature being 780°C, and the pressure in the melting furnace being 0.5 MPa;
(2) then atomizing metal melt droplets using argon as the medium, with the atomization pressure of 8.6 MPa; and
(3) sieving the prepared spherical powders with a sieve of 100 meshes to 200 meshes to obtain powders having an average particle size of about 80 µm and drying the sieved powders in a vacuum drying oven at 90°C for 8 hours, and the resulted powders may be used for LENS printing.

According to the test, the powder has a microhardness of 132 Hv and an internal grain size of 3.8 µm, and the size of Al₃Sc, Al₃Zr, Al₂Cu, Al₆Mn and Mg₂Si nanoparticles in the powder is 2 nm to 25 nm.

### Embodiment 10

An LENS printed work piece is provided, the preparation steps of which are as follows:
(1) raising the heating temperature of a substrate to 300°C;
(2) performing selective laser melting on the aluminum alloy powders obtained in embodiment 9 and then performing LENS printing; wherein process parameters include a laser power of 1500 W; a scanning speed of 8 mm/s; and a powder feeding rate of 30 g/min.

An obtained workpiece has a microstructure grain size of 1 µm, and dispersed Al₃Sc, Al₃Zr, Al₂Cu, Al₆Mn and Mg₂Si nanoparticle precipitates of 2 nm are present in the grains.

The workpiece obtained has a tensile strength of 377 MPa, an elongation of 28%, and a stress corrosion resistance SCC of 247.

The workpiece obtained is subjected to heat treatment at 250°C and preserved in a vacuum annealing furnace for 45 hours, such that it has a tensile strength of up to 472 MPa, an elongation up to 19%, and a stress corrosion resistance SCC up to 257.

Although the present application has been described in detail in conjunction with the general description and specific embodiments, it is obvious to those skilled in the art that some modifications or improvements can be made on the basis of the present application, within the scope of the claimed subject matter. Therefore, these modifications or improvements made without departing from the scope of protection as defined by the appended claims fall within the scope of the present application.

## Claims

1. An aluminum alloy powder, comprising the following components by mass percent: 1.00 wt% to 10.00 wt% of Mg, 02 wt% to 1 wt% of Sc, 0.1 wt% to 1.60 wt% of Zr, 0.1 wt% to 1 wt% of Mn, 0.01 wt% to 0.90 wt% of Fe, 0.01 wt% to 3.00 wt% of Cu, 1 wt% to 3 wt% of Si, 0.01 wt% to 3.50 wt% of Zn, 0.01 wt% to 0.08 wt% of Cr, 0.01 wt% to 0.08 wt% of Ni, and the balance of Al.

2. The aluminum alloy powder of claim 1, **characterized in that** contents of some elements in the aluminum alloy powder are:
6 wt% to 9 wt% of Mg,
and/or 0.1 wt% to 0.6 wt% of Zr.

3. The aluminum alloy powder of claim 1, **characterized by** comprising the following components by mass percent: 8 wt% to 9 wt% of Mg, 0.6 wt% to 0.7 wt% of Sc, 0.2 wt% to 0.3 wt% of Zr, 0.7 wt% to 0.9 wt% of Mn, 0.2 wt% to 0.25 wt% of Fe, 1.5 wt% to 1.6 wt% of Cu, 1.1 wt% to 1.2 wt% of Si, 0.7 wt% to 0.9 wt% of Zn, 0.01 wt% to 0.04 wt% of Cr, 0.05 wt% to 0.06 wt% of Ni, and the balance of Al; alternatively, the aluminum alloy powder comprises the following components by mass percent: 8 wt% to 9 wt% of Mg, 0.6 wt% to 0.7 wt% of Sc, 0.3 wt% to 0.4 wt% of Zr, 0.8 wt% to 0.9 wt% of Mn, 0.04 wt% to 0.06 wt% of Fe, 2.2 wt % to 2.3 wt% of Cu, 2 wt% to 2.1 wt% of Si, 1 wt% to 1.2 wt% of Zn, 0.01 wt % to 0.02 wt% of Cr, 0.05 wt% to 0.06 wt% of Ni, and the balance of Al.

4. The aluminum alloy powder of any one of claims 1 to 3 **characterized by** having a microhardness of 120 Hv to 170 Hv;
and/or, an internal grain size of 1 µm to 6 µm in the powder;
and/or, an internal nanoparticle size of 2 nm to 100 nm, as determined by scanning electron microscopy (SEM);
and/or, an internal nanoparticle composed by one or more of Al₃Sc, Al₃Zr, Al₂Cu, Al₆Mn and Mg₂Si.

5. The aluminum alloy powder of claim 4, wherein the internal nanoparticle includes at least the composite of Al₃Sc, Al₃Zr and Al₆Mn.

6. A preparation method of the aluminum alloy powder of any one of claims 1 to 5 comprising:
(1) vacuum melting raw materials;
(2) preparing powder by vacuum gas atomization; and
(3) sieving and drying the powder.

7. The preparation method of claim 6, **characterized in that** in step (2), an atomizing gas is argon or helium;
and/or, an atomization pressure is 0.5 MPa to 9 MPa;
and/or, an atomization cone angle is 30° to 70°;
and/or, an atomization temperature is 700°C to 900°C;
and/or, in step (3), the sieved powder has a particle size of 5 µm to 150 µm and a main body particle size of 15 µm to 75 µm, wherein the main body particle size means that the powder in this size range accounts for more than 60%.

8. The preparation method of claim 6, **characterized in that** specific steps comprise:
(1) vacuum melting: adding weighed master alloy/pure metal raw materials into a vacuum induction melting furnace for preheating, preserving for 10 to 15 minutes, continuing heating to 710°C to 810°C at a heating rate of 10 °C/min to 20 °C/min, keeping at a constant temperature until the raw materials are softened, spreading a covering agent on the surface of the melt, degassing, stirring, and standing while heat-preserving, so that the melt elements are evenly diffused, and then casted with an iron mould to obtain a raw material ingot blank for gas atomization;
(2) vacuum gas atomizing: putting the raw material ingot blank into a vacuum atomization melting furnace for heating and refining, the vacuum degree in the furnace being less than or equal to 10 Pa, raising the temperature to 700°C to 900°C at a heating rate of 5 °C/min to 10 °C/min, preserving for 10 to 30 minutes while exhausting and performing electromagnetic stirring continuously during the preservation; after the exhaustion is completed, allowing a homogenized alloy liquid to pass a tundish and discharge spouts and enter an atomization tank having an atomization pressure of 0.5 MPa to 9 MPa and an atomization cone angle of 30° to 70°, the atomizing gas being argon or helium;
(3) powder sieving: sieving the prepared powder, wherein the sieved powder has a particle size of 5 µm to 150 µm and a main body particle size of 15 µm to 75 µm, wherein the main body particle size means that the powder in this size range accounts for more than 60%; and
(4) powder drying: putting the powder in a vacuum drying oven, drying for 2 to 8 hours at a temperature of 90°C to 95°C.

9. An application of the aluminum alloy powder of any one of claims 1 to 5 in fields of 3D printing, thermal spraying, cold spraying, resurfacing welding, cladding, powder metallurgy and powder forging.

10. A 3D printed workpiece, being prepared from the aluminum alloy powder of any one of claims 1 to 3 by 3D printing; the 3D printing comprising the following steps:
(1) raising the heating temperature of a printing substrate to 180°C to 300°C;
(2) performing selective laser melting on the aluminum alloy powder and then performing 3D printing;
wherein the conditions for SLM printing includes a laser power of 200 W to 400 W, a scanning speed of 600 mm/s to 1200 mm/s, a scanning distance of 0.05 mm to 0.1 mm and a scanning layer thickness of 0.03 mm to 0.05 mm; and
the conditions for LENS printing includes a laser power of 1500 W to 1600 W, a scanning speed of 8 mm/s to 10 mm/s and a powder feeding rate of 30 g/min to 40 g/min.

## Patentansprüche

1. Aluminiumlegierungspulver, umfassend die folgenden Komponenten in Masseprozent:
1,00 Gew.-% bis 10,00 Gew.-% Mg, 0,2 Gew.-% bis 1 Gew.-% Sc, 0,1 Gew.-% bis 1,60 Gew.-% Zr, 0,1 Gew.-% bis 1 Gew.-% Mn, 0,01 Gew.-% bis 0,90 Gew.-% Fe, 0,01 Gew.-% bis 3,00 Gew.-% Cu, 1 Gew.-% bis 3 Gew.-% Si, 0,01 Gew.-% bis 3,50 Gew.-% Zn, 0,01 Gew.-% bis 0,08 Gew.-% Cr, 0,01 Gew.-% bis 0,08 Gew.-% Ni und den Rest Al.

2. Aluminiumlegierungspulver nach Anspruch 1, **dadurch gekennzeichnet, dass** Gehalte von einigen Elementen in dem Aluminiumlegierungspulver sind:
6 Gew.-% bis 9 Gew.-% Mg
und/oder 0,1 Gew.-% bis 0,6 Gew.-% Zr.

3. Aluminiumlegierungspulver nach Anspruch 1, **dadurch gekennzeichnet, dass** es die folgenden Komponenten in Masseprozent umfasst: 8 Gew.-% bis 9 Gew.-% Mg, 0,6 Gew.-% bis 0,7 Gew.-% Sc, 0,2 Gew.-% bis 0,3 Gew.-% Zr, 0,7 Gew.-% bis 0,9 Gew.-% Mn, 0,2 Gew.-% bis 0,25 Gew.-% Fe, 1,5 Gew.-% bis 1,6 Gew.-% Cu, 1,1 Gew.-% bis 1,2 Gew.-% Si, 0,7 Gew.-% bis 0,9 Gew.-% Zn, 0,01 Gew.-% bis 0,04 Gew.-% Cr, 0,05 Gew.-% bis 0,06 Gew.-% Ni und den Rest Al;
alternativ umfasst das Aluminiumlegierungspulver die folgenden Komponenten in Masseprozent: 8 Gew.-% bis 9 Gew.-% Mg, 0,6 Gew.-% bis 0,7 Gew.-% Sc, 0,3 Gew.-% bis 0,4 Gew.-% Zr, 0,8 Gew.-% bis 0,9 Gew.-% Mn, 0,04 Gew.-% bis 0,06 Gew.-% Fe, 2,2 Gew.-% bis 2,3 Gew.-% Cu, 2 Gew.-% bis 2,1 Gew.-% Si, 1 Gew.-% bis 1,2 Gew.-% Zn, 0,01 Gew.-% bis 0,02 Gew.-% Cr, 0,05 Gew.-% bis 0,06 Gew.-% Ni und den Rest Al.

4. Aluminiumlegierungspulver nach einem der Ansprüche 1 bis 3, **dadurch gekennzeichnet, dass** es aufweist:
eine Mikrohärte von 120 Hv bis 170 Hv;
und/oder eine interne Korngröße von 1 µm bis 6 µm im Pulver;
und/oder eine interne Nanopartikelgröße von 2 nm bis 100 nm, bestimmt durch Rasterelektronenmikroskopie (REM);
und/oder ein inneres Nanopartikel, zusammengesetzt aus einem oder mehreren von Al₃Sc, Al₃Zr, Al₂Cu, Al₆Mn und Mg₂Si.

5. Aluminiumlegierungspulver nach Anspruch 4, wobei das innere Nanopartikel mindestens die Zusammensetzung von Al₃Sc, Al₃Zr, und Al₆Mn umfasst.

6. Herstellungsverfahren des Aluminiumlegierungspulvers nach einem der Ansprüche 1 bis 5, umfassend:
(1) Vakuumschmelzen von Ausgangsstoffen;
(2) Herstellen eines Pulvers durch Vakuumgaszerstäubung; und
(3) Sieben und Trocknen des Pulvers.

7. Herstellungsverfahren nach Anspruch 6, **dadurch gekennzeichnet, dass** im Schritt (2) ein Zerstäubungsgas Argon oder Helium ist;
und/oder ein Zerstäubungsdruck 0,5 MPa bis 9 MPa beträgt;
und/oder ein Zerstäubungskegelwinkel 30° bis 70° beträgt;
und/oder eine Zerstäubungstemperatur 700 °C bis 900 °C beträgt;
und/oder, im Schritt (3), das gesiebte Pulver eine Partikelgröße von 5 µm bis 150 µm und eine Hauptkörperpartikelgröße von 15 µm bis 75 µm aufweist, wobei die Hauptkörperpartikelgröße bedeutet, dass sich das Pulver in diesem Größenbereich auf mehr als 60 % beläuft.

8. Herstellungsverfahren nach Anspruch 6, **dadurch gekennzeichnet, dass** die konkreten Schritte umfassen:
(1) Vakuumschmelzen: Zufügen gewogener Hauptlegierungs- / Reinmetallausgangsstoffe in einen Vakuuminduktionsschmelzofen zum Vorwärmen, Halten für 10 bis 15 Minuten, Fortsetzen des Erwärmens auf 710 °C bis 810 °C bei einer Erwärmungsrate von 10 °C/min bis 20 °C/min, Halten bei einer konstanten Temperatur, bis die Ausgangsstoffe erweicht sind, Ausbreiten eines Deckmittels auf der Oberfläche der Schmelze, Entgasen, Rühren und Stehenlassen während Wärmeerhaltung, sodass die Schmelzelemente gleichmäßig diffundiert werden und dann mit einer Eisenform gegossen werden, um einen Ausgangsstoffrohblock für Gaszerstäubung zu erhalten;
(2) Vakuumgaszerstäubung: Einsetzen des Ausgangsstoffrohblocks in einen Vakuumzerstäubungsschmelzofen zum Erwärmen und Frischen, wobei der Grad des Vakuums in dem Ofen kleiner als oder gleich 10 Pa ist, Erhöhen der Temperatur auf 700 °C bis 900 °C bei einer Erwärmungsrate von 5 °C/min bis 10 °C/min, Halten für 10 bis 30 Minuten während des Absaugens und Durchführens von elektromagnetischem Rühren, kontinuierlich während des Haltens; nachdem das Absaugen abgeschlossen ist, Zulassen, dass eine homogenisierte Legierungsflüssigkeit einen Tundish und Austragsrinnen passiert und in einen Zerstäubungsbehälter mit einem Zerstäubungsdruck von 0,5 MPa bis 9 MPa und einem Zerstäubungskegelwinkel von 30° bis 70° eintritt, wobei das Zerstäubungsgas Argon oder Helium ist;
(3) Sieben des Pulvers: Sieben des hergestellten Pulvers, wobei das gesiebte Pulver eine Partikelgröße von 5 µm bis 150 µm und eine Hauptkörperpartikelgröße von 15 µm bis 75 µm aufweist, wobei die Hauptkörperpartikelgröße bedeutet, dass sich das Pulver in dieser Größe auf mehr als 60 % beläuft; und
(4) Trocknen des Pulvers: Geben des Pulvers in einen Vakuumtrocknungsofen, Trocknen für 2 bis 8 Stunden bei einer Temperatur vom 90 °C bis 95 °C.

9. Anwendung des Aluminiumlegierungspulvers nach einem der Ansprüche 1 bis 5 auf den Gebieten des 3D-Druckens, thermischen Spritzens, kalten Spritzens, Instandsetzungsauftragsschweißens, Plattierens, der Pulvermetallurgie und des Pulverschmiedens.

10. 3D-gedrucktes Werkstück, hergestellt aus dem Aluminiumlegierungspulver nach einem der Ansprüche 1 bis 3 durch 3D-Drucken;
wobei das 3D-Drucken die folgenden Schritte umfasst:
(1) Erhöhen der Erwärmungstemperatur eines Drucksubstrats auf 180 °C bis 300 °C;
(2) Durchführen von selektivem Laserschmelzen an dem Aluminiumlegierungspulver und dann Durchführen von 3D-Drucken;
wobei die Bedingungen für das SLM-Drucken eine Laserleistung von 200 W bis 400 W, eine Scangeschwindigkeit von 600 mm/s bis 1200 mm/s, einen Scanabstand von 0,05 mm bis 0,1 mm und eine Scanschichtdicke von 0,03 mm bis 0,05 mm beinhalten; und
die Bedingungen für das LENS-Drucken eine Laserleistung von 1500 W bis 1600 W, eine Scangeschwindigkeit von 8 mm/s bis 10 mm/s und eine Pulverzuführrate von 30 g/min bis 40 g/min beinhalten.

## Revendications

1. Poudre d'alliage d'aluminium, comprenant les composants suivants en pourcentage de masse :
1,00% en poids à 10,00% en poids de Mg, 0% en poids à 1% en poids de Sc, 0,1% en poids à 1,60% en poids de Zr, 0,1% en poids à 1% en poids de Mn, 0,01% en poids à 0,90% en poids de Fe, 0,01% en poids à 3,00% en poids de Cu, 1% en poids à 3,00% en poids de Si, 0,01% en poids à 3,50% en poids de Zn, 0,01% en poids à 0,08% en poids de Cr, 0,01% en poids à 0,08% en poids de Ni, et le reste d'Al.

2. Poudre d'alliage d'aluminium selon la revendication 1, **caractérisée par le fait que** les teneurs de certains éléments dans la poudre d'alliage d'aluminium sont :
6% en poids à 9% en poids de Mg,
et/ou 0,1% en poids à 0,6% en poids de Zr.

3. Poudre d'alliage d'aluminium selon la revendication 1, **caractérisée par le fait qu'**elle comprend les composants suivants en pourcentage de masse : 8% à 9% en poids de Mg, 0,6% à 0,7% en poids de Sc, 0,2% en poids à 0,3% en poids de Zr, 0,7% en poids à 0,9% en poids de Mn, 0,2% en poids à 0,25% en poids de Fe, 1,5% en poids à 16% en poids de Cu, 1,1% en poids à 1,2% en poids de Si, 0,7% en poids à 0,9% en poids de Zn, 0,01% en poids à 0,04% en poids de Cr, 0,05% en poids à 0,06% en poids de Ni, et le reste d'Al,
en option, la poudre d'alliage d'aluminium comprend les composants suivants en pourcentage de masse : 8% en poids à 9% en poids de Mg, 0,6% en poids à 0,7% en poids de Sc, 0,3% en poids à 0,4% en poids de Zr, 0,8% en poids à 0,9% en poids de Mn, 0,04% en poids à 0,06% en poids de Fe, 2,2% en poids à 2,3% en poids de Cu, 2% en poids à 2,1% en poids de Si, 1% en poids à 1,2% en poids de Zn, 0,01% en poids à 0,02% en poids de Cr, 0,05% en poids à 0,06% en poids de Ni, et le reste d'Al.

4. Poudre d'alliage d'aluminium selon l'une des revendications 1 à 3, **caractérisée par** une microdureté de 120 Hv à 170 Hv ;
et/ou une taille de grain interne de 1 µm à 6 µm dans la poudre ;
et/ou une taille interne de nanoparticules de 2 nm à 100 nm, déterminée par microscopie électronique à balayage (MEB) ;
et/ou, une nanoparticule interne composée d'un ou plusieurs éléments parmi Al₃Sc, Al₃Zr, Al₂Cu, Al₆Mn et Mg₂Si.

5. Poudre d'alliage d'aluminium selon la revendication 4, dans laquelle la nanoparticule interne comprend au moins le composite d'Al₃Sc, Al₃Zr et Al₆Mn.

6. Procédé de préparation de la poudre d'alliage d'aluminium selon l'une des revendications 1 à 5 comprenant :
(1) la fusion sous vide des matières premières ;
(2) la préparation de la poudre par atomisation sous vide ; et
(3) le tamisage et le séchage de la poudre.

7. Procédé de préparation selon la revendication 6, **caractérisé par le fait qu'**à l'étape (2), un gaz d'atomisation est l'argon ou l'hélium ;
et/ou, une pression d'atomisation de 0,5 MPa à 9 MPa ;
et/ou un angle de cône d'atomisation de 30° à 70° ;
et/ou une température d'atomisation de 700°C à 900°C ;
et/ou, à l'étape (3), la poudre tamisée a une taille de particule comprise entre 5 µm et 150 µm et une taille de particule principale comprise entre 15 µm et 75 µm, la taille de particule principale signifiant que la poudre dans cette gamme de taille représente plus de 60%.

8. Procédé de préparation selon la revendication 6, **caractérisé par le fait que** les étapes spécifiques comprennent :
(1) fusion sous vide : ajout de matières premières en alliage maître/métal pur pesées dans un four de fusion à induction sous vide pour préchauffage, conservation pendant 10 à 15 minutes, poursuite du chauffage à 710°C à 810°C à une vitesse de chauffage de 10°C/min à 20°C/min, maintien à une température constante jusqu'à ce que les matières premières soient ramollies, étaler un agent de couverture sur la surface de la matière fondue, dégazer, remuer et laisser reposer pendant que la chaleur préserve, de manière à ce que les éléments fondus soient uniformément diffusés, puis couler avec un moule en fer pour obtenir une ébauche de lingot de matière première pour l'atomisation du gaz ;
(2) atomisation par gaz sous vide : introduction de l'ébauche de lingot de matière première dans un four de fusion à atomisation sous vide pour le chauffage et l'affinage, le degré de vide dans le four étant inférieur ou égal à 10 Pa, élévation de la température à 700°C à 900°C à une vitesse de chauffage de 5°C/min à 10°C/min, conservation pendant 10 à 30 minutes pendant l'épuisement et agitation électromagnétique continue pendant la présentation ; une fois l'épuisement terminé, passage d'un liquide d'alliage homogénéisé à travers un répartiteur et des becs de décharge et entrée dans un réservoir d'atomisation ayant une pression d'atomisation de 0,5 MPa à 9 MPa et un angle de cône d'atomisation de 30° à 70°, le gaz d'atomisation étant de l'argon ou de l'hélium.5 MPa à 9 MPa et un angle de cône d'atomisation de 30° à 70°, le gaz d'atomisation étant de l'argon ou de l'hélium ;
(3) tamisage de la poudre : tamiser la poudre préparée, la poudre tamisée ayant une taille de particule comprise entre 5 µm et 150 µm et une taille de particule principale comprise entre 15 µm et 75 µm, la taille de particule principale signifiant que la poudre dans cette gamme de taille représente plus de 60%, et
(4) séchage de la poudre : placer la poudre dans une étuve à vide, sécher pendant 2 à 8 heures à une température de 90°C à 95°C.

9. Application de la poudre d'alliage d'aluminium selon l'une des revendications 1 à 5 dans les domaines de l'impression 3D, de la pulvérisation thermique, de la pulvérisation à froid, du soudage par resurfaçage, du placage, de la métallurgie des poudres et du forgeage des poudres.

10. Pièce d'usinage imprimée en 3D, préparée à partir de la poudre d'alliage d'aluminium de l'une des revendications 1 à 3 par impression en 3D ;
l'impression 3D comprenant les étapes suivantes :
(1) augmenter la température de chauffage d'un support d'impression de 180°C à 300°C ;
(2) la fusion sélective au laser de la poudre d'alliage d'aluminium, puis l'impression 3D ;
dans lequel les conditions d'impression SLM comprennent une puissance laser de 200 W à 400 W, une vitesse de balayage de 600 mm/s à 1200 mm/s, une distance de balayage de 0,05 mm à 0,1 mm et une épaisseur de couche de balayage de 0,03 mm à 0,05 mm, et
les conditions d'impression LENS comprennent une puissance laser de 1500 W à 1600 W, une vitesse de balayage de 8 mm/s à 10 mm/s et un taux d'alimentation en poudre de 30 g/min à 40 g/min.
